# FASCICULE DE BREVET EUROPEEN

(11) **EP 3 802 181 B1**
(45) Date de publication et mention de la délivrance du brevet: **03.09.2025**
(21) Numéro de dépôt: 19748853.9
(22) Date de dépôt: 03.06.2019
(51) Int. Cl.: B60J 10/86, B61D 19/02, B60Q 1/32

(54) **ENSEMBLE DE SIGNALISATION POUR VANTAIL, PORTE ET VEHICULE DE TRANSPORT CORRESPONDANTS**
SIGNALANORDNUNG FÜR EIN TÜRBLATT UND ENTSPRECHENDE TÜR UND TRANSPORTFAHRZEUG
SIGNALING ASSEMBLY FOR A DOOR LEAF, AND CORRESPONDING DOOR AND TRANSPORT VEHICLE

(30) Priorité: 04.06.2018 FR 1854820
(43) Date de publication de la demande: 14.04.2021
(73) Titulaire: Faiveley Transport Tours, 37701 Saint Pierre des Corps Cedex (FR); Etablissements L.Rustin, 72340 La Chartre-Sur-Le-Loir (FR)
(72) Inventeur: SALLES, Olivier, 35133 LECOUSSE (FR); VAUTIER, Fabien, 37270 VERETZ (FR); HUET, Laurent, 37510 SAINT-GENOUPH (FR); RUSTIN, Louis Alain, 72340 LA CHARTRE-SUR-LE-LOIR (FR)
(74) Mandataire: IXAS Conseil
(86) Numéro de dépôt international: PCT/FR2019/051291
(87) Numéro de publication internationale: WO 2019/234332

(56) Documents cités:
- WO-A1-2011/138292
- WO-A1-2011/138292
- WO-A1-2011/138292
- WO-A1-2018/219694
- WO-A1-2018/219694
- DE-A1- 102016 119 447
- FR-A1- 3 051 731
- FR-A1- 3 055 348
- FR-A1- 3 055 348
- FR-A1- 3 055 348
- JP-A- 2017 214 023
- JP-A- 2017 214 023
- JP-A- 2017 214 023

## Description

### Domaine technique de l'invention

La présente invention concerne le domaine des portes d'accès à un véhicule de transport. Ces portes d'accès peuvent tout d'abord désigner des portes appartenant à des véhicules de transport, notamment de type train, tramway, métro, trolleybus ou encore bus. Au sens de l'invention, ces portes d'accès désignent également des portes dites palières, encore dénommées façades de quai.

L'invention vise plus spécifiquement un vantail appartenant à une telle porte d'accès, qui comprend des moyens permettant de signaler, à l'attention des voyageurs, des informations relatives à l'état d'ouverture et/ou de fermeture de cette porte. L'invention vise plus particulièrement, mais non exclusivement, un vantail dit galbé, à savoir un vantail courbé, vu selon sa direction longitudinale. L'invention concerne notamment un vantail de porte coulissante, mais trouve également son application à d'autres types de vantaux, notamment ceux équipant des portes de type louvoyante coulissante. L'invention vise des portes qui peuvent être équipées, soit d'un unique vantail, soit de deux vantaux.

### Etat de la technique

Lors de l'arrêt d'un véhicule de transport, les portes de celui-ci s'ouvrent puis se ferment de manière à permettre aux passagers de monter dans ce véhicule, ou bien d'en descendre. Dans le cas où le quai est équipé de portes palières, ces dernières font également l'objet d'ouvertures et de fermetures. Pendant ces opérations, des incidents sont susceptibles de se produire. On citera notamment la possibilité de coincement d'un passager, d'un objet ou d'un animal, ou bien un problème d'ordre technique empêchant le déplacement normal de cette porte.

On conçoit que ces incidents sont préjudiciables à un service normal du véhicule, pour plusieurs raisons. Ainsi, ils sont susceptibles d'endommager les objets coincés par la porte. Par ailleurs, de façon plus critique, ils peuvent causer des blessures aux voyageurs, entraînant la responsabilité de la société de transport. Enfin, ces incidents sont de nature à induire un retard significatif du véhicule.

Afin d'éviter dans la mesure du possible ce type d'incidents, on a proposé d'équiper les portes avec des moyens de signalisation lumineux. De façon typique, ces derniers ont pour but de fournir aux passagers des informations, relatives à l'état d'ouverture de la porte. Il peut en particulier être indiqué si la porte se trouve en cours de fermeture, en cours d'ouverture, ou encore si elle est condamnée. De la sorte, la sécurité des voyageurs est préservée, tout en réduisant le risque de retard du véhicule.

De manière constructive, on connaît tout d'abord une solution consistant à placer ces moyens de signalisation sur les organes de manœuvre des portes, tels que leur bouton-poussoir. Cette première solution présente cependant certains inconvénients. En effet, la surface éclairée est relativement faible, ce qui rend l'information difficilement perceptible par les utilisateurs.

On a également proposé d'utiliser des diodes électroluminescentes (ou DEL), encore connues sous l'abréviation LED (Light Emitting Diode). Une première solution, connue par le document Knorr Bremse WO 2011/138292, prévoit de fixer ces diodes directement sur la face extérieure du vantail de porte. Cependant, l'information délivrée par ces diodes est alors sensiblement invisible de l'intérieur, lorsque la porte est ouverte. Par ailleurs, cette solution implique une modification significative de la structure du vantail, de sorte qu'elle ne peut pas être appliquée de manière simple sur des véhicules existants.

En outre il est connu, par FR 3 055 348, de placer les diodes précitées sur le bord du vantail, au voisinage de joints translucides. De manière typique, ces joints sont fixés par encliquetage élastique dans un profilé, s'étendant sur un bord vertical du vantail. Les diodes sont alors disposées contre le fond du logement, destiné à la réception d'un joint correspondant. Quand bien même cette dernière solution apporte des améliorations vis-à-vis de l'enseignement de WO 2011/138292, elle implique cependant des inconvénients spécifiques.

Tout d'abord elle ne se prête pas, de manière satisfaisante, à une utilisation dans un vantail galbé. En effet, les diodes sont typiquement montées sur un support allongé, qui est fabriqué de manière rectiligne. Afin de pouvoir être introduits dans le profilé, équipant le vantail galbé, le support et les diodes doivent être recourbés selon le même profil que le vantail. Ils sont donc soumis à une déformation mécanique, qui est notamment susceptible de détériorer les diodes, par rupture au niveau de leur soudure sur le support.

Par ailleurs l'éclairage de la zone du joint, destinée à fournir l'information lumineuse aux voyageurs, se révèle tout d'abord insuffisante. En effet, cette zone d'éclairage du joint est espacée de la diode d'une distance significative. De plus, cette zone d'éclairage et cette diode sont séparées par le talon du joint, permettant l'accrochage de ce dernier sur le profilé précité. Dans ces conditions, la lumière émise par la diode est réfléchie et réfractée par les différentes faces de ce talon, de sorte que seule une faible fraction de cette lumière est effectivement visible au niveau de la zone d'éclairage du joint.

De plus, le fait de placer la diode au fond du logement du profilé est désavantageux, en termes de facilité de montage. En effet, l'ouverture délimitée par le profilé est très étroite, ce qui restreint l'accès en vue d'un tel montage. Par conséquent, ce dernier est relativement complexe. En outre, durant ce montage, il existe un risque significatif de détériorer les diodes.

Enfin on connaît, par JP 2017 214023, une porte de véhicule ferroviaire dont chaque vantail est équipé d'un joint, dont la partie supérieure est réalisée en un matériau translucide ou transparent, alors que les portions médianes et inférieures sont de couleur sombre. Par ailleurs le joint, qui est agencé sous forme de corps creux, intègre un organe d'émission de lumière. Ce dernier se compose d'un support, sur lequel sont montés des éléments d'émission de lumière, par exemple de type LED. La solution décrite dans ce document japonais implique cependant certains inconvénients. En effet, il n'est pas possible de placer la source lumineuse sur toute la hauteur du vantail, sauf à exposer cette source lumineuse à des risques mécaniques susceptibles de la détériorer.

Compte tenu de ce qui précède, un objectif de la présente invention est de remédier, au moins partiellement, aux inconvénients de l'art antérieur évoqués ci-dessus.

Un autre objectif de l'invention est de proposer une solution, qui permet de préserver l'intégrité mécanique des moyens d'éclairage, en particulier dans le cas d'une utilisation pour un vantail galbé.

Un autre objectif de l'invention est de réaliser une signalisation lumineuse d'intensité satisfaisante, afin tout d'abord qu'elle soit aisément visible par les utilisateurs, que ces derniers se trouvent à l'intérieur ou à l'extérieur du véhicule.

Un autre objectif de l'invention est de réaliser une signalisation lumineuse qui puisse être perçue de manière satisfaisante par les utilisateurs dans toutes les conditions d'exposition, en particulier lorsque la porte se trouve en extérieur, notamment en plein soleil.

Un autre objectif de l'invention est de proposer un tel ensemble de signalisation, dont le montage est facilité par rapport à l'art antérieur.

Un autre objectif de l'invention est de proposer un tel ensemble de signalisation, dont la structure mécanique est relativement simple.

### Objets de l'invention

Au moins un des objectifs ci-dessus est atteint grâce à un ensemble de signalisation selon la revendication 1 annexée.

Des caractéristiques additionnelles de cet ensemble de signalisation font l'objet des revendications 2 à 10 annexée.

L'invention concerne également un vantail (60), en particulier un vantail galbé, selon la revendication 11 annexée.

Une caractéristique avantageuse de ce vantail fait l'objet de la revendication 12 annexée.

L'invention a également pour objet une porte d'accès à un véhicule de transport, selon la revendication 13 annexée.

L'invention a également pour objet un véhicule de transport, notamment du type train, tramway, métro, bus ou encore trolleybus, comprenant au moins une porte telle que définie ci-dessus.

L'invention a également pour objet un quai d'arrêt d'un véhicule de transport, notamment du type train, tramway, métro, bus ou encore trolleybus, comprenant au moins une porte telle que définie ci-dessus.

### Description des figures

L'invention va être décrite ci-après, en référence aux dessins annexés, donnés uniquement à titre d'exemples non limitatifs, dans lesquels :
La figure 1 est une vue schématique de face, illustrant une porte de véhicule de transport dont chaque vantail est équipé d'un ensemble de signalisation conforme à l'invention.
La figure 2 est une vue de dessus, à plus grande échelle, illustrant un joint et un profilé appartenant à l'ensemble de signalisation conforme à l'invention.
Les figures 3 et 4 sont des vues de dessus, analogues à la figure 2, illustrant deux variantes de réalisation de l'ensemble de signalisation conforme à l'invention.
La figure 5 est une vue de face, illustrant un organe d'éclairage destiné à équiper l'un ou l'autre des ensembles de signalisation des figures 2 à 4, à la livraison de cet organe.
La figure 6 est une vue de face, illustrant cet organe d'éclairage une fois galbé, ainsi que le vantail et le joint associés à cet organe d'éclairage.

Les repères numériques suivants sont utilisés dans les dessins :

| | | | |
|---|---|---|---|
| 50 | Porte | 60,70 | Vantaux |
| 80 | Dormant | 90 | Baie |
| 62,72 | Corps de 70 | 63,73 | Vitre |
| 64,74 | Bouton-poussoir | 66,76 | Cadre de 70 |
| I | Intérieur du véhicule | E | Extérieur du véhicule |
| 1,1' | Profilé | X60 | Direction de 60 |
| 11,12 | Ailes de 1 | 10 | Ame de 1 |
| 14 | Logement de 1 | 16,17 | Arêtes de 1 |
| 18,19 | Tôles | | |
| 2 | Joint | 20 | Embase de 2 |
| 21 | Région d'accrochage de 2 | 24,25 | Epaulements |
| 28 | Evidement | | |
| 3 | Plan de renvoi | A3 | Angle de 3 |
| F1,F2 | Trajet optique | | |
| 4 | Organe d'éclairage | 40 | Support de 4 |
| 42 | Diodes de 4 | | |
| Figure 3 | Mêmes numéros +100 | Figure 4 | Mêmes numéros +200 |

### Description détaillée de l'invention

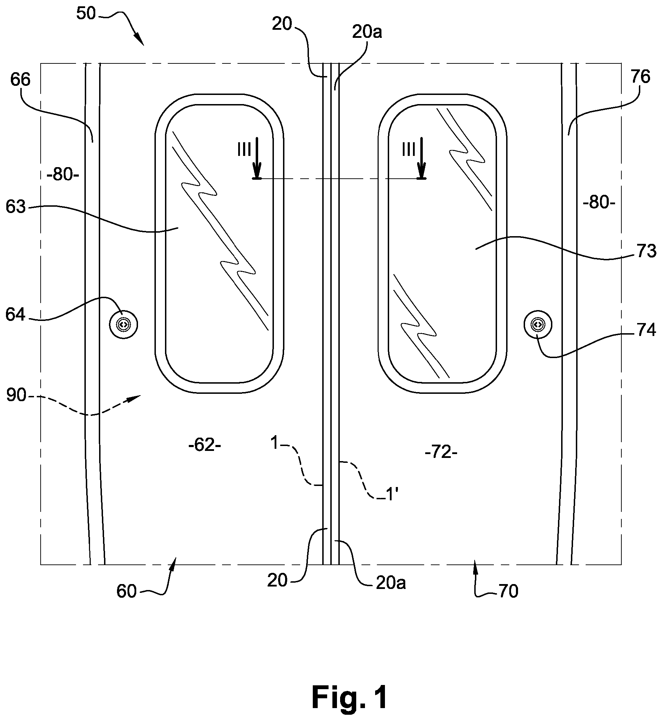

La figure 1 annexée illustre une porte, désignée dans son ensemble par la référence 50, qui équipe un véhicule de transport. Cette porte comprend, de manière habituelle, un ouvrant formé par deux vantaux 60 et 70, ainsi qu'un dormant 80 représenté de manière schématique, lequel est disposé à la périphérie d'une baie 90 ménagée dans la caisse de ce véhicule. Cette porte peut être munie de deux vantaux comme dans l'exemple illustré, mais aussi d'un unique vantail.

Dans l'exemple illustré, la porte équipe un train du type métro. L'invention trouve cependant son application à des portes destinées à équiper d'autres véhicules de transport tels que notamment des tramways, des trolleybus, ou encore des trains différents de celui mentionné ci-dessus. Dans ce qui suit, on suppose que les vantaux sont verticaux, notamment en référence à la figure 1. Par ailleurs, les termes « intérieur » et « extérieur » sont utilisés en référence à la caisse de ce véhicule de transport.

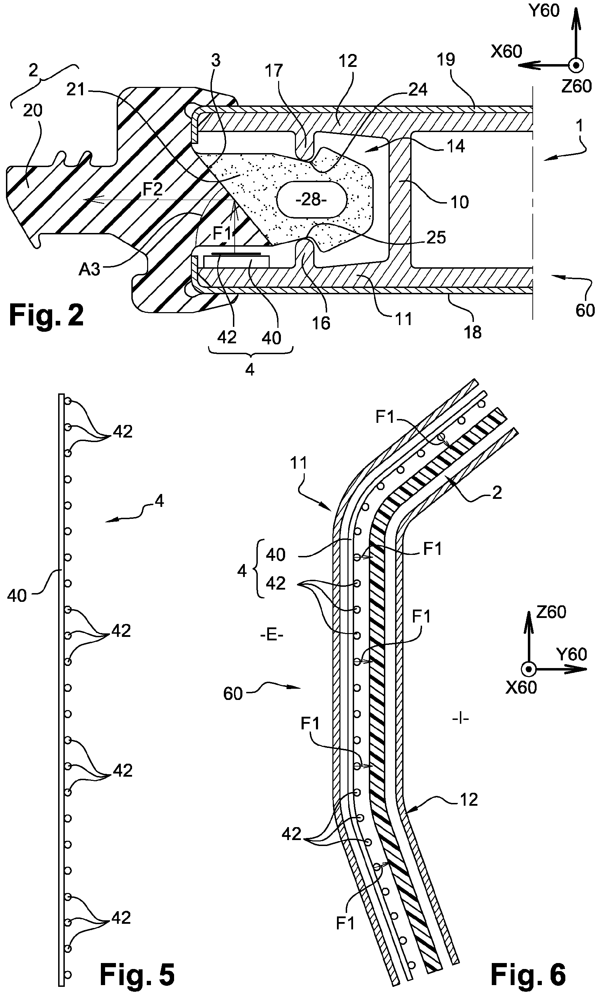

L'invention vise plus particulièrement, mais non exclusivement, un vantail 60 ou 70 dit galbé. Comme le montre notamment la figure 6, cela signifie que ce vantail est courbé, vu selon sa direction longitudinale X60, qui correspond à la direction d'avancée du véhicule ferroviaire. De manière typique, la partie située à mi-hauteur du vantail fait saillie vers l'extérieur, par rapport aux parties respectivement haute et basse de ce vantail. Sur la figure 6, la partie droite correspond à l'intérieur I du véhicule, alors que la partie gauche correspond à l'extérieur E.

Chaque vantail 60, 70 comprend, de manière connue, un corps central 62, 72 équipé notamment d'une vitre 63, 73 et d'un organe de manœuvre 64, 74, par exemple du type bouton-poussoir. Ce corps est typiquement formé de deux parements opposés respectivement intérieur et extérieur, ainsi que d'une âme intercalée entre ces parements. Par ailleurs, un cadre 66, 76 s'étend à la périphérie extérieure de ce corps. Ce cadre comprend notamment un profilé, qui est de type connu en soi, prévu sur les bords verticaux du corps. On va maintenant décrire la structure du profilé 1 équipant le vantail 60, étant entendu que l'autre vantail 70 possède un profilé 1' de structure identique, illustré de manière très schématique sur la figure 1.

Le profilé 1 comporte une âme 10, ainsi que deux ailes 11 et 12, lesquelles forment des régions longitudinales du vantail, en ce qu'elles s'étendent parallèlement à la direction X60 ci-dessus. Cette âme et ces deux ailes définissent un logement 14 sensiblement en forme de U, ouvert à l'opposé de ce corps. Par ailleurs, deux arêtes 16 et 17 font saillie l'une en direction de l'autre, à partir d'une aile respective. Comme on le verra dans ce qui suit, ces arêtes assurent une fonction d'accrochage d'un joint. Enfin chaque aile est recouverte, au moins en partie, par une tôle respective 18 et 19, formant les parois intérieure et extérieure du vantail.

On va maintenant décrire, en référence notamment à la figure 2, un ensemble de signalisation conforme à l'invention. Ce dernier comprend essentiellement :
- le profilé 1 décrit ci-dessus, ainsi que :
- un joint 2 ;
- un organe d'éclairage équipé de diodes électroluminescentes, désigné dans son ensemble par la référence 4.

Le joint 2 comprend tout d'abord une embase massive 20 destinée à faire saillie en dehors du logement 14, de manière à constituer une région d'éclairage du joint. Cette embase se prolonge par une région 21 dite d'accrochage ou de fixation, destinée à être logée dans le volume intérieur du logement précité. Dans l'exemple illustré, cette région d'accrochage est une région d'encliquetage élastique. Cette région 21 comprend un évidement 28, permettant l'encliquetage précité.

Par ailleurs, l'extrémité libre de cette région est effilée vers l'avant, tout en définissant deux épaulements 24 et 25, destinés à coopérer avec les arêtes 16, 17 du profilé. Le joint 2 s'étend sur au moins une partie substantielle de la hauteur du vantail et, de manière préférée, sur sensiblement toute cette hauteur. L'évidement 28 débouche au moins à une extrémité longitudinale du joint, en particulier à son extrémité supérieure. De manière préférée, cet évidement 28 s'étend sur l'intégralité du joint, de sorte qu'il débouche aux deux extrémités longitudinales de ce dernier.

De manière avantageuse, le joint 2 est réalisé en deux matériaux différents, du moins en ce qui concerne leurs propriétés optiques. Ainsi, la région d'accrochage 21 est réalisée en un matériau opaque, de préférence blanc, apte à renvoyer la lumière. En revanche, la région d'éclairage 20 est réalisée en un matériau translucide, apte à conduire la lumière. De manière constructive, on utilisera typiquement un matériau de type silicone, pour les deux régions respectivement d'accrochage et d'éclairage. À titre de variante, on pourra choisir d'autres matériaux, tels qu'un PVC souple, un Thermoplastique Elastomère (TPE), un polyuréthane, ou tout autre matériau approprié.

De manière préférée, l'interface entre les deux régions 20 et 21 est formée par un plan 3 dit de renvoi, s'étendant selon un angle A3 par rapport à l'axe longitudinal X60. De manière typique, cet angle A3 est voisin de 45°, de sorte qu'il peut dévier la lumière selon un quart de tour, soit 90°. A titre de variante supplémentaire, la surface de renvoi 3 pourra présenter une section parabolique, hyperbolique ou analogue, ou bien une combinaison entre une telle section courbe et des parties planes, de telle sorte que la surface de renvoi soit apte à réfléchir les rayons lumineux globalement vers la zone 20. Le joint 2 est réalisé par tout procédé approprié, notamment par co extrusion.

En référence aux figures 5 et 6, l'organe d'éclairage 4 comprend tout d'abord un corps allongé 40, formant support. Ce corps est réalisé en un matériau qui lui confère une tenue mécanique suffisante, de sorte qu'il peut être fixé contre l'aile longitudinale 11 du profilé. De manière typique, ce corps est formé par un PCB (Printed Circuit Board, ou Circuit Imprimé), de type connu en soi. Comme le montre notamment la figure 2, l'organe 4 formant moyens d'éclairage est situé à l'extérieur du joint 2. En d'autres termes, cet organe est placé en dehors du volume intérieur de ce joint, lequel est notamment matérialisé par l'évidement 28. Par conséquent, cet organe d'éclairage 4 est dissocié par rapport au joint. Ce positionnement spécifique des moyens d'éclairage vis-à-vis de ce joint induit certains avantages en regard de l'état de la technique, lesquels seront détaillés ci-après.

Le corps 40 de l'organe d'éclairage 4 est équipé d'une pluralité d'éléments d'éclairage, qui sont des diodes électroluminescentes 42 dans l'exemple illustré. Le nombre de ces diodes, lesquelles sont de type connu en soi, est par exemple compris entre 20 et 600. Ces diodes sont commandées de manière classique, par l'intermédiaire de moyens de commande non représentés, de type connu en soi. A titre de variante non représentée, la source lumineuse peut être d'un type différent, comme une fibre optique diffusante, un écran OLED, ou analogue.

L'organe d'éclairage 4 est fixé sur la face intérieure de l'aile 11, c'est-à-dire la face de cette dernière qui est tournée vers l'aile en regard 12. Cet organe d'éclairage s'étend sur au moins une partie substantielle de la hauteur de cette aile et, de manière préférée, sur sensiblement toute cette hauteur. Cet organe est monté sur l'aile 11 grâce à des moyens de fixation, qui peuvent être utilisés seuls ou en combinaison mutuelle. Dans l'exemple décrit en référence à la figure 2, un ou deux orifice(s) non représenté(s) peuv(en)t être prévu(s), notamment sur au moins une des extrémités opposées du corps, de manière à permettre le vissage de ce corps sur l'aile 11. À titre de variante non représentée, on peut également prévoir que le corps 40 est collé contre la face en regard de cette aile.

En service, comme le montrent les figures 2 et 6, les diodes électroluminescentes 42 émettent un faisceau de lumière dit primaire, selon la flèche F1, soit de manière globalement perpendiculaire à la direction X60. Cette lumière ainsi émise atteint ensuite l'interface plane 3 du joint, de sorte qu'elle est alors renvoyée selon un changement de direction d'environ 90°. Cette lumière ainsi renvoyée se propage alors selon la flèche F2, montrée en figure 2, soit de manière globalement parallèle à la direction X60. Cela permet d'éclairer, de manière efficace, la région d'éclairage 20 du joint 2.

Le joint 2 peut recevoir une clé de verrouillage non représentée, de tout type approprié. Dans ce cas ce joint est creusé d'un volume intérieur, non représenté sur la figure 2, lequel est destiné à la réception de cette clé. Cette clé est réalisée en un matériau qui lui confère une résistance mécanique suffisante pour bloquer le joint, à l'encontre d'efforts visant à extraire ce dernier hors du logement du profilé. Cette clé peut également être réalisée en un matériau apportant une fonction supplémentaire de dissipation thermique de la chaleur, générée en service par l'organe d'éclairage. À cet égard, on pourra choisir une clé réalisée en aluminium ou en un matériau analogue. On notera cependant que ce type de matériau est moins bien adapté qu'une matière plastique, pour des vantaux galbés.

La clé s'étend sur au moins une partie substantielle de la hauteur du joint et, de manière préférée, sur sensiblement toute cette hauteur. Néanmoins, il convient d'éviter que cette clé ne fasse saillie longitudinalement par rapport au joint 2, une fois l'ensemble de signalisation monté sur le vantail 60. En effet un tel dépassement longitudinal de la clé serait susceptible de gêner le bon fonctionnement du vantail. On prévoit donc avantageusement un moyen d'immobilisation qui empêche que cette clé ne puisse glisser longitudinalement, en dehors du volume intérieur du joint.

A cet effet, un ou plusieurs moyens d'immobilisation peuvent être utilisés, seuls ou en combinaison. De préférence ces moyens d'immobilisation sont des moyens amovibles ou réversibles, à savoir qu'ils peuvent être démontés sans risque d'endommager la clé ou le joint. A titre d'exemple, on peut fixer un bouchon à chaque extrémité du joint, obstruant ainsi le débouché du volume intérieur. On peut aussi coller la clé contre la paroi interne de ce volume intérieur, par exemple à l'aide d'un colle souple épaisse de type polyuréthane. On peut également mettre en place un axe dans le plan horizontal, empêchant la translation de la clé suivant l'axe vertical : cet axe peut notamment être une goupille ou une vis. On peut également mettre en place une vis, non représentée, reliant le joint à la clé; cette vis peut par exemple être auto-taraudeuse dans le matériau de la clé.

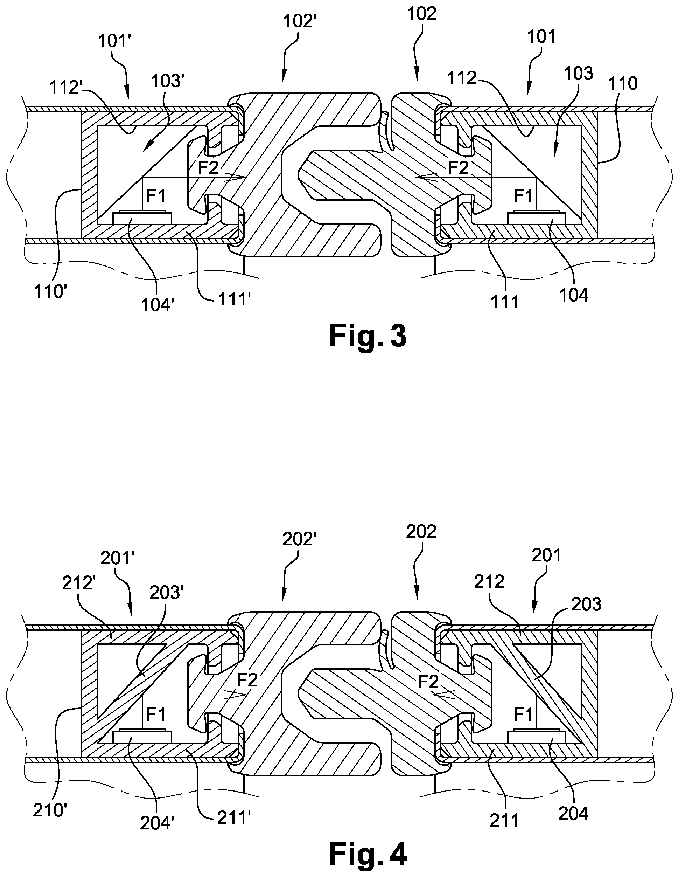

La figure 3 illustre une variante du mode de réalisation, illustré en référence à la figure 2. Sur cette figure 3, les éléments mécaniques analogues à ceux de la figure 2 y sont affectés des mêmes numéros de référence, augmentés de 100. Sur cette figure 3, on a représenté les profilés 101, 101' et les joints 102, 102' appartenant aux deux vantaux en regard.

Sur la figure 3, les moyens de renvoi de la lumière ne sont pas constitués par le joint proprement dit, mais par un insert de renvoi 103, 103' réalisé par exemple en matière plastique blanche, ou encore en aluminium. Cet insert de renvoi rapporté pourra également être un profil en silicone blanc. Cet insert est fixé par tous moyens appropriés contre le fond 110, 110' du profilé, ainsi que l'aile 112, 112' opposée à celle 111, 111' munie des moyens d'éclairage 104, 104'. Cet insert de renvoi présente de préférence une couleur claire, notamment blanche, afin d'assurer de manière optimale cette fonction.

La figure 4 illustre une autre variante, similaire à celle de la figure 3. Sur cette figure 4, les éléments mécaniques analogues à ceux de la figure 3 y sont affectés des mêmes numéros de référence, augmentés de 100. Sur cette figure 4, on a représenté les profilés 201, 201' et les joints 202, 202' appartenant aux deux vantaux en regard. Sur la figure 4, les moyens de renvoi de la lumière sont formés par une paroi de renvoi oblique, appartenant au profilé proprement dit. Cette paroi 203, 203' relie le fond 210, 210' du profilé, ainsi que l'aile 212, 212' opposée à celle 211, 211' munie des moyens d'éclairage 204, 204'.

L'ensemble de signalisation, conforme à l'invention, présente de nombreux avantages par rapport à l'art antérieur.

Tout d'abord l'invention permet de préserver l'intégrité mécanique des moyens d'éclairage. À cet égard, on se référera aux figures 5 et 6, qui illustrent les moyens d'éclairage 4 respectivement avant et après l'opération mécanique, visant à les galber. On note que la déformation de l'organe d'éclairage, le long du galbe du vantail, se fait selon une direction qui ne détériore pas les diodes luminescentes. Tout risque de casse, susceptible d'intervenir au niveau des soudures, est donc sensiblement éliminé.

L'invention permet également de générer une intensité lumineuse, dans la région du joint à éclairer, qui est bien plus élevée que dans les solutions connues. En particulier, cette intensité lumineuse garantit une perception satisfaisante pour les utilisateurs, même lorsque le joint précité est exposé à la lumière naturelle, notamment au soleil. En effet, selon l'invention, les moyens d'éclairage sont disposés au plus près de la région lumineuse du joint. Par conséquent, la distance séparant ces moyens d'éclairage et cette région lumineuse est réduite. De façon avantageuse aucun élément mécanique, susceptible d'interférer avec la lumière émise par les moyens d'éclairage, n'est interposé entre ces moyens d'éclairage et cette région lumineuse.

On peut également citer certains avantages spécifiques de l'invention, vis-à-vis de l'enseignement de JP 2017 214023 mentionné ci-dessus. On rappellera que, dans ce document japonais, les moyens d'éclairage sont intégrés dans le volume intérieur du joint. Par conséquent ces moyens d'éclairage, proposés dans ce document, ne peuvent tout d'abord pas être fixés sur une région longitudinale du vantail. En effet l'intégration de ces moyens d'éclairage, à l'intérieur du joint, rend une telle fixation impossible sauf à extraire ces moyens d'éclairage hors du joint.

Par ailleurs la présente invention permet avantageusement d'éclairer le joint sur toute la hauteur du vantail, ce qui n'est pas le cas dans ce document. En effet, la source lumineuse décrite dans ce document ne peut pas être positionnée sur toute la hauteur du vantail. Si tel était le cas, cette source lumineuse subirait alors tous les chocs dus notamment aux passagers ou aux bagages. Or, cette source lumineuse ne bénéficie pas d'une protection mécanique, selon l'enseignement de ce document. Dans ces conditions, la source lumineuse décrite dans ce document est nécessairement cantonnée à la partie haute du vantail, laquelle est l'unique zone à ne pas subir de chocs. Au contraire, dans la présente invention, la source lumineuse peut avantageusement être intégrée au vantail tout en bénéficiant d'une protection mécanique. De la sorte, cette source peut s'étendre sur sensiblement toute la hauteur du vantail, ce qui assure une meilleure signalisation globale.

Par ailleurs, l'invention permet de faciliter le montage des moyens d'éclairage, notamment en regard de l'enseignement de FR 3 055 348. En effet, selon l'invention, ces moyens d'éclairage peuvent être fixés à proximité du débouché du logement, formé par le profilé. Par conséquent l'accès offert à l'opérateur est facilité, ce qui réduit le risque de déformation que peuvent subir ces moyens d'éclairage, durant cette opération de montage.

En outre, selon une caractéristique avantageuse de l'invention, les moyens d'éclairage sont intégrés dans le volume intérieur global du profilé. En d'autres termes, ces moyens d'éclairage ne font pas saillie latéralement, par rapport aux bords de ce vantail et de ce joint. Cela permet de protéger ces moyens d'éclairage à l'égard de chocs, exercés selon un axe perpendiculaire au plan principal du vantail. A cet égard, on rappellera que la solution proposée par WO 2011/138292 n'est pas satisfaisante sur cet aspect, puisqu'elle prévoit de placer ces moyens lumineux en applique sur le vantail.

Enfin il est à souligner que la variante de la figure 3 est tout particulièrement adaptée, pour équiper en joints lumineux les portes des véhicules ferroviaires déjà en exploitation. On notera que l'éclairage permis par cette variante est tout particulièrement satisfaisant, dans la mesure où le joint qui est utilisé est dépourvu d'évidement.

L'invention n'est pas limitée aux exemples décrits et représentés. Ainsi, dans les trois modes de réalisation ci-dessus, la région longitudinale du vantail, sur laquelle sont fixés les moyens d'éclairage, est formée par une aile longitudinale du profilé. Cependant, à titre de variante non représentée, on peut prévoir que cette région longitudinale de fixation est directement formée sur le corps du vantail. Cette région de fixation peut par exemple être constituée par l'extrémité de la tôle 18, illustrée en particulier sur la figure 2.

Dans cet esprit on peut par exemple prévoir que le joint est directement collé sur le corps du vantail, sans faire appel à un profilé intermédiaire. Dans ce cas les moyens d'éclairage, fixés sur la tôle 18, sont disposés en regard du joint. On peut également prévoir que le vantail fait appel à un profilé intermédiaire mais que la tôle 18, assurant la fixation des moyens d'éclairage, fait saillie par rapport à l'extrémité de ce profilé.

## Revendications

1. Ensemble de signalisation (1, 2, 4) d'un vantail (60), en particulier d'un vantail galbé, destiné à équiper une porte d'accès à un véhicule de transport, notamment ferroviaire, ledit ensemble de signalisation comprenant :
- un joint (2), lequel joint comporte une région d'accrochage (21) sur le vantail, ainsi qu'une région d'éclairage (20),
- des moyens d'éclairage (4), propres à éclairer ladite région d'éclairage dudit joint, de façon à émettre au moins un signal visuel, en particulier représentatif de l'état d'ouverture et/ou de fermeture de la porte,
les moyens d'éclairage sont fixés sur une région longitudinale (11 ; 111 ; 211) du vantail, de façon à émettre de la lumière selon une direction sensiblement perpendiculaire (F1) à la direction longitudinale (X60) de ce vantail, **caractérisé en ce que** ledit ensemble comprend en outre des moyens (3 ; 103 ; 203) de renvoi de la lumière émise par les moyens d'éclairage, dirigeant cette lumière selon une direction sensiblement parallèle (F2) à la direction longitudinale du vantail.

2. Ensemble de signalisation selon la revendication précédente, dans lequel les moyens d'éclairage (4) sont situés en dehors du volume intérieur du joint (2).

3. Ensemble de signalisation selon l'une des revendications précédentes, dans lequel les moyens de renvoi comprennent une surface de renvoi (103 ; 203), la section de la surface de renvoi étant notamment une courbe conique, par exemple de type parabole, ou une combinaison de plan(s) et de courbe(s) conique(s).

4. Ensemble de signalisation selon la revendication 3, dans lequel les moyens de renvoi comprennent un plan de renvoi (103 ; 203) s'étendant de manière oblique par rapport à la direction longitudinale du vantail, notamment selon un angle (A3) voisin de 45°.

5. Ensemble de signalisation selon l'une quelconque des revendications 1 ou 2, dans lequel les moyens de renvoi comprennent une paroi de renvoi (3) appartenant au joint (2), la paroi de renvoi étant notamment formée par une interface (3) entre la région d'éclairage (20) et la région d'accrochage (21) du joint.

6. Ensemble de signalisation selon la revendication précédente, dans lequel la région d'accrochage (21) du joint est réalisée en un matériau opaque, alors que la région d'éclairage (20) du joint est réalisée en un matériau translucide, le joint (2) étant notamment réalisé par un procédé de co extrusion.

7. Ensemble de signalisation selon l'une quelconque des revendications précédentes, comprenant en outre un profilé (1, 1') destiné à s'étendre sur au moins une partie de la périphérie du corps du vantail, ledit profilé définissant un logement (14) ouvert à l'opposé dudit corps, la région d'accrochage (21) du joint étant reçue au moins en partie dans ledit logement dudit profilé, les moyens d'éclairage étant fixés sur une aile longitudinale (11 ; 111 ; 211) du profilé, les moyens de renvoi comprenant en particulier un insert de renvoi (103), notamment de couleur claire, fixé contre le profilé, ou bien une paroi de renvoi (203) appartenant au profilé.

8. Ensemble de signalisation selon l'une des revendications précédentes, dans lequel lesdits moyens d'éclairage comprennent au moins un organe d'éclairage (4), lequel comprend un support (40) et des éléments d'éclairage (42) montés sur ce support (40), lesdits éléments d'éclairage étant notamment de type diodes électroluminescentes (42), le support (40) de l'organe d'éclairage étant en particulier de forme allongée et, de préférence, présentant des dimensions longitudinales voisines de celles de l'aile (11) de montage du profilé.

9. Ensemble de signalisation selon la revendication précédente, dans lequel cet ensemble comprend des moyens de fixation, permettant la fixation des moyens d'éclairage (4) sur ladite aile de montage (11), sachant que lesdits moyens de fixation comprennent en particulier des moyens de fixation amovible, notamment par vissage, ou bien des moyens de fixation par collage, ou bien des moyens de fixation par coopération de formes, notamment une glissière dont est équipée l'aile de montage, présentant des rebords de retenue de l'organe d'éclairage.

10. Ensemble de signalisation selon l'une quelconque des revendications précédentes, dans lequel les moyens d'éclairage (4) sont intégrés dans le volume global du profilé, de manière à protéger les moyens d'éclairage (4) à l'égard de chocs, exercés selon un axe perpendiculaire au plan principal du vantail.

11. Vantail (60, 70), en particulier vantail galbé, destiné à équiper une porte d'accès à un véhicule de transport, notamment ferroviaire, ledit vantail comprenant en outre au moins un ensemble de signalisation selon l'une des revendications précédentes.

12. Vantail selon la revendication précédente, comprenant en outre un corps (62, 72) et un cadre (66, 76) s'étendant sur au moins une partie de la périphérie dudit corps, ledit cadre comprenant au moins un profilé (1, 1') définissant un logement (14) ouvert à l'opposé dudit corps, ledit vantail comprenant en outre au moins un ensemble de signalisation selon l'une des revendications 7 à 10, la région d'accrochage (21) du joint étant reçue au moins en partie dans ledit logement.

13. Porte d'accès à un véhicule de transport, notamment du type train, tramway, métro ou encore trolleybus ou bus, en particulier porte dudit véhicule de transport, ou bien porte palière pour quai d'arrêt dudit véhicule de transport, ladite porte comprenant un dormant solidaire du bâti dudit véhicule, ou bien solidaire dudit quai, ainsi qu'au moins un vantail (60, 70) conforme à la revendication 11 ou 12, monté mobile par rapport audit dormant.

14. Véhicule de transport, notamment du type train, tramway, métro, bus ou encore trolleybus, comprenant au moins une porte conforme à la revendication précédente.

15. Quai d'arrêt d'un véhicule de transport, notamment du type train, tramway, métro, bus ou encore trolleybus, comprenant au moins une porte conforme à la revendication 13.

## Patentansprüche

1. Signalanordnung (1, 2, 4) eines Türblatts (60), insbesondere eines gewölbten Türblatts, die dazu bestimmt ist, eine Zugangstür zu einem Transportfahrzeug, insbesondere einem Schienenfahrzeug, auszustatten, wobei die Signalanordnung umfasst:
- eine Dichtung (2), wobei die Dichtung einen Bereich zum Einhängen (21) am Türblatt sowie einen Beleuchtungsbereich (20) aufweist,
- Beleuchtungsmittel (4), die geeignet sind, den Beleuchtungsbereich der Dichtung zu beleuchten, so dass mindestens ein visuelles Signal ausgesendet wird, das insbesondere für den Öffnungs- und/oder Schließzustand der Tür repräsentativ ist,
die Beleuchtungsmittel sind an einem Längsbereich (11; 111; 211) des Flügels befestigt, so dass sie Licht in einer Richtung aussenden, die im Wesentlichen senkrecht (F1) zur Längsrichtung (X60) dieses Flügels verläuft; und
die genannte Baugruppe umfasst außerdem Mittel (3; 103; 203) zur Umlenkung des von den Beleuchtungsmitteln ausgesandten Lichts, die dieses Licht in eine Richtung lenken, die im Wesentlichen parallel (F2) zur Längsrichtung des Flügels verläuft.

2. Signalanordnung nach dem vorhergehenden Anspruch, wobei die Beleuchtungseinrichtung (4) außerhalb des Innenvolumens der Dichtung (2) angeordnet ist.

3. Signalanordnung nach einem der vorhergehenden Ansprüche, wobei die Umlenkmittel eine Umlenkfläche (103; 203) umfassen, wobei der Querschnitt der Umlenkfläche insbesondere eine konische Kurve, beispielsweise vom Typ Parabel, oder eine Kombination aus Ebene(n) und konischer(n) Kurve(n) ist.

4. Signalanordnung nach Anspruch 3, bei der die Umlenkmittel eine Umlenkfläche (103; 203) umfassen, die sich schräg zur Längsrichtung des Türblatts, insbesondere in einem Winkel (A3) nahe 45°, erstreckt.

5. Signalanordnung nach einem der Ansprüche 1 oder 2, bei der die Umlenkmittel eine zur Dichtung (2) gehörende Umlenkwand (3) umfassen, wobei die Umlenkwand insbesondere durch eine Schnittstelle (3) zwischen dem Beleuchtungsbereich (20) und dem Einhängebereich (21) der Dichtung gebildet wird.

6. Signalanordnung nach dem vorhergehenden Anspruch, bei der der Einhängebereich (21) der Dichtung aus einem lichtundurchlässigen Material hergestellt ist, während der Beleuchtungsbereich (20) der Dichtung aus einem lichtdurchlässigen Material hergestellt ist, wobei die Dichtung (2) insbesondere durch ein Co-Extrusionsverfahren hergestellt wird.

7. Signalanordnung nach einem der vorhergehenden Ansprüche, die außerdem ein Profil (1, 1') umfasst, das dazu bestimmt ist, sich über mindestens einen Teil des Umfangs des Körpers des Türblatts zu erstrecken, wobei das Profil eine Aufnahme (14) definiert, die gegenüber dem Körper offen ist, wobei der Einhängebereich (21) der Dichtung mindestens teilweise in der Aufnahme des Profils aufgenommen wird, wobei die Beleuchtungsmittel an einem Längsflügel (11 ; 111; 211) des Profils befestigt sind, wobei die Umlenkmittel insbesondere einen Umlenkungseinsatz (103), insbesondere von heller Farbe, der an dem Profil befestigt ist, oder eine Umlenkwand (203), die zu dem Profil gehört, umfassen.

8. Signalanordnung nach einem der vorhergehenden Ansprüche, bei der die Beleuchtungsmittel mindestens ein Beleuchtungsorgan (4) umfassen, das einen Träger (40) und auf diesem Träger (40) montierte Beleuchtungselemente (42) umfasst, wobei die Beleuchtungselemente insbesondere vom Typ Leuchtdioden (42) sind, wobei der Träger (40) des Beleuchtungsorgans insbesondere eine längliche Form hat und vorzugsweise Längsabmessungen aufweist, die in der Nähe derjenigen des Montageflügels (11) des Profils liegen.

9. Signalanordnung nach dem vorhergehenden Anspruch, bei der diese Anordnung Befestigungsmittel umfasst, die die Befestigung der Beleuchtungsmittel (4) an dem Montageflügel (11) ermöglichen, wobei die Befestigungsmittel insbesondere Mittel zur lösbaren Befestigung, insbesondere durch Verschraubung, oder Mittel zur Befestigung durch Verklebung oder Mittel zur formschlüssigen Befestigung, insbesondere eine Gleitschiene, mit der der Montageflügel ausgestattet ist und die Ränder zum Halten des Beleuchtungsorgans aufweist, umfassen.

10. Signalanordnung nach einem der vorhergehenden Ansprüche, bei der die Beleuchtungsmittel (4) in das Gesamtvolumen des Profils integriert sind, so dass die Beleuchtungsmittel (4) gegen Stöße geschützt sind, die entlang einer Achse senkrecht zur Hauptebene des Flügels ausgeübt werden.

11. Türblatt (60, 70), insbesondere gewölbtes Türblatt, das dazu bestimmt ist, eine Zugangstür zu einem Transportfahrzeug, insbesondere einem Schienenfahrzeug, auszustatten, wobei das Türblatt außerdem mindestens eine Signalanordnung nach einem der vorhergehenden Ansprüche umfasst.

12. Türblatt nach dem vorhergehenden Anspruch, ferner umfassend einen Körper (62, 72) und einen Rahmen (66, 76), der sich über mindestens einen Teil des Umfangs des Körpers erstreckt, wobei der Rahmen mindestens ein Profil (1, 1') umfasst, das eine Aufnahme (14) definiert, die gegenüber dem Körper offen ist, wobei das Türblatt ferner mindestens eine Signalanordnung nach einem der Ansprüche 7 bis 10 umfasst, wobei der Einhängebereich (21) der Dichtung mindestens teilweise in der Aufnahme aufgenommen ist.

13. Tür für den Zugang zu einem Transportfahrzeug, insbesondere vom Typ Zug, Straßenbahn, U-Bahn oder auch Trolleybus oder Bus, insbesondere Tür des Transportfahrzeugs oder auch Zugangstür für einen Halteplatz des Transportfahrzeugs, wobei die Tür einen fest mit dem Rahmen des Fahrzeugs oder auch fest mit dem Halteplatz verbundenen Rahmen sowie mindestens einen Flügel (60, 70) nach Anspruch 11 oder 12 umfasst, der beweglich in Bezug auf den Rahmen montiert ist.

14. Transportfahrzeug, insbesondere vom Typ Zug, Straßenbahn, U-Bahn, Bus oder auch Trolleybus, mit mindestens einer Tür gemäß dem vorhergehenden Anspruch.

15. Bahnsteig eines Transportfahrzeugs, insbesondere vom Typ Zug, Straßenbahn, U-Bahn, Bus oder auch Trolleybus, mit mindestens einer Tür gemäß Anspruch 13.

## Claims

1. Signaling assembly (1, 2, 4) for a leaf (60), in particular a curved leaf, intended to equip an access door to a transport vehicle, in particular a railway vehicle, said signaling assembly comprising:
- a seal (2), which seal comprises a region (21) for attachment to the leaf, and a lighting region (20),
- lighting means (4), capable of illuminating said lighting region of said seal, so as to emit at least one visual signal, in particular representative of the state of opening and/or closing of the door,
the lighting means are fixed to a longitudinal region (11; 111; 211) of the leaf, so as to emit light in a direction substantially perpendicular (F1) to the longitudinal direction (X60) of this leaf; **characterized in that**
said assembly furthermore comprises means (3; 103; 203) for deflecting the light emitted by the lighting means, directing this light in a direction substantially parallel (F2) to the longitudinal direction of the leaf.

2. Signaling assembly according to the preceding claim, in which the lighting means (4) are located outside the interior volume of the seal (2).

3. Signaling assembly according to one of the preceding claims, in which the deflection means comprise a deflection surface (103; 203), the cross-section of the deflection surface being in particular a conical curve, for example of the parabola type, or a combination of plane(s) and conical curve(s).

4. Signaling assembly according to claim 3, in which the deflection means comprise a deflection plane (103; 203) extending obliquely with respect to the longitudinal direction of the leaf, in particular at an angle (A3) close to 45°.

5. Signaling assembly according to any one of claims 1 or 2, in which the deflection means comprise a deflection wall (3) belonging to the seal (2), the deflection wall being formed in particular by an interface (3) between the illumination region (20) and the attachment region (21) of the seal.

6. Signaling assembly according to the preceding claim, in which the attachment region (21) of the seal is made of an opaque material, while the illumination region (20) of the seal is made of a translucent material, the seal (2) being produced in particular by a co-extrusion process.

7. Signaling assembly according to any one of the preceding claims, further comprising a profile (1, 1') intended to extend over at least part of the periphery of the body of the leaf, said profile defining a housing (14) open away from the said body, the attachment region (21) of the seal being received at least in part in the said housing of the said profile, the lighting means being fixed to a longitudinal flange (11 ; 111; 211) of the section, the deflection means comprising in particular a deflection insert (103), in particular of light colour, fixed to the section, or else a deflection wall (203) belonging to the section.

8. Signaling assembly according to one of the preceding claims, in which said lighting means comprise at least one lighting member (4), which comprises a support (40) and lighting elements (42) mounted on this support (40), said lighting elements being in particular of the light-emitting diode type (42), the support (40) of the lighting member being in particular of elongate shape and, preferably, having longitudinal dimensions close to those of the mounting flange (11) of the profile.

9. Signaling assembly according to the preceding claim, in which this assembly comprises fixing means enabling the lighting means (4) to be fixed to the said mounting flange (11), said fixing means comprising in particular removable fixing means, in particular by screwing, or fixing means by gluing, or fixing means by cooperation of shapes, in particular a slide with which the mounting flange is equipped, having edges for retaining the lighting member.

10. Signaling assembly according to any one of the preceding claims, in which the lighting means (4) are integrated into the overall volume of the profile, so as to protect the lighting means (4) against impacts exerted along an axis perpendicular to the main plane of the leaf.

11. Leaf (60, 70), in particular a curved leaf, intended to equip an access door to a transport vehicle, in particular a railway vehicle, the said leaf also comprising at least one signaling assembly according to one of the preceding claims.

12. Leaf according to the preceding claim, further comprising a body (62, 72) and a frame (66, 76) extending over at least part of the periphery of said body, said frame comprising at least one profile (1, 1') defining a housing (14) open opposite said body, said leaf further comprising at least one signaling assembly according to one of claims 7 to 10, the attachment region (21) of the seal being received at least partly in said housing.

13. An access door to a transport vehicle, in particular of the train, tramway, metro or trolleybus or bus type, in particular a door of said transport vehicle, or a landing door for a platform of said transport vehicle, said door comprising a frame secured to the frame of said vehicle, or secured to said platform, and at least one leaf (60, 70) in accordance with claim 11 or 12, mounted so as to be movable relative to said frame.

14. Transport vehicle, in particular of the train, tramway, metro, bus or trolleybus type, comprising at least one door in accordance with the preceding claim.

15. A platform for a transport vehicle, in particular of the train, tramway, metro, bus or trolleybus type, comprising at least one door as claimed in claim 13.
